(19) Europäisches Patentamt

European Patent Office

Office européen des brevets

(11) **EP 1 715 369 A1**

(12) **EUROPEAN PATENT APPLICATION**

(43) Date of publication:
**25.10.2006 Bulletin 2006/43**

(51) Int Cl.:
***G02B 26/12*** (2006.01)

(21) Application number: **05257439.9**

(22) Date of filing: **02.12.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | (71) Applicant: **KONICA MINOLTA BUSINESS TECHNOLOGIES, INC.**<br>**Tokyo 192-8505 (JP)** |
| (30) Priority: **20.04.2005 JP 2005122174** | (72) Inventor: **Sekine, Haruyuki**<br>**Tokyo 192-8505 (JP)** |
| | (74) Representative: **Rees, Alexander Ellison**<br>**Urquhart-Dykes & Lord LLP**<br>**30 Welbeck Street**<br>**London W1G 8ER (GB)** |

(54) **Laser optical unit, laser optical apparatus, and image formation apparatus**

(57)    A laser optical unit in a laser optical apparatus having a scanner (15) for scanning a beam in a main scanning direction, includes: a laser light source (11) including two light-emitting elements (11a,11b), time for which one light-emitting element lights overlapping with time for which the other light-emitting element lights; a collimating lens (12) located for two beams emitted from the light source; and a slit (13) located for the two beams for limiting travel of the two beams from the collimating lens to the scanner, wherein $0.9 \leqq \cos\theta \leqq (w \cdot d)/(0.872 \cdot f \cdot \lambda)$ where $\theta(°)$ is the angle between a direction in which the two light-emitting elements are arranged and the sub scanning direction, $d(\mu m)$ is the distance between the two light-emitting elements, $\lambda(nm)$ is the wavelength of laser light, $f(mm)$ is the focal length of the collimating lens, and $w(mm)$ is the width of the slit.

FIG.2

Printed by Jouve, 75001 PARIS (FR)

EP 1 715 369 A1

**Description**

BACKGROUND OF THE INVENTION

Field of the Invention

This invention relates to a laser optical unit, a laser optical apparatus, and an image formation apparatus including such a laser optical apparatus.

Description of the Related Art

Various techniques for forming an image by simultaneously scanning a plurality of laser lights in parallel are proposed as means for improving the processing speeds of image formation apparatus, such as duplicating machines and printers. For example, a technique for forming an image at a high speed by using a semiconductor laser array having a plurality of light-emitting elements, by arranging the plurality of light-emitting elements in a sub scanning direction, and by performing parallel scanning is disclosed in JP Tokukai-sho-57-22218A (hereinafter referred to as "patent document 1").

However, usually the characteristics of a plurality of laser lights (light beams) emitted from a semiconductor laser array are highly uniform and they are highly coherent. Accordingly, if time for which a light source lights overlaps with time for which another light source lights, interference fringes appear in the area where the plurality of laser lights intersect. A slit (aperture) for shaping a beam spot on a photosensitive drum is located behind a collimating lens included in a laser scanning optical system. When the distribution of interference fringes varies due to an unstable laser oscillation, the quantity of light which passes through the slit varies. This leads to variations (nonuniformity) in density. As a result, image quality deteriorates. For example, irregular white lines appear on an image the whole of which is black. To control the above variations in the quantity of light which passes through the slit, the method of selecting slit width is proposed in JP-Tokukai-2004-109588A (hereinafter referred to as "patent document 2").

With the method disclosed in the above patent document 2, however, slit width is changed. This influences the diameter of a beam spot on an exposure surface (photosensitive drum surface, for example). Therefore, to make the diameter of a beam spot on the exposure surface a predetermined value, the characteristics of, for example, the lens must be changed. This means that the laser scanning optical system is redesigned. As a result, development costs and man-hours increase.

SUMMARY OF THE INVENTION

The present invention was made under the background circumstances described above. An object of the present invention is to control variation in the quantity of light due to the interference of a plurality of laser lights without changing conventional laser scanning optical systems having a plurality of light-emitting elements.

In order to the above-described problem, in accordance with the first aspect of the present invention, a laser optical unit to be incorporated in a laser optical apparatus having a scanner for scanning a light beam in a main scanning direction, comprises: a laser light source including two light-emitting elements, time for which one light-emitting element lights overlapping with time for which the other light-emitting element lights; a collimating lens located for both of two light beams emitted from the laser light source; and a slit located for both of the two light beams, for limiting travel of the two light beams outputted from the collimating lens and inputted to the scanner, wherein $0.9 \leqq \cos\theta \leqq (w \cdot d)/(0.872 \cdot f \cdot \lambda)$ where $\theta$ (°) is an angle at which a direction in which the two light-emitting elements are arranged and a sub scanning direction meet, d ($\mu$m) is distance between the two light-emitting elements, $\lambda$ (nm) is wavelength of laser light, f (mm) is focal length of the collimating lens, and w (mm) is width of the slit.

Preferably, longitudinal direction of the slit corresponds with the main scanning direction.

In accordance with the second aspect of the present invention, a laser optical apparatus comprises: a laser light source including two light-emitting elements, time for which one light-emitting element lights overlapping with time for which the other light-emitting element lights; a collimating lens located for both of two light beams emitted from the laser light source; a slit located for both of the two light beams, for limiting travel of the two light beams outputted from the collimating lens; and a scanner located for both of the two light beams for scanning the two light beams which passed through the slit in a main scanning direction, wherein the laser light source is located so as to satisfy the inequality $0.9 \leqq \cos\theta \leqq (w \cdot d)/(0.872 \cdot f \cdot \lambda)$ where $\theta$ (°) is an angle at which a direction in which the two light-emitting elements are arranged and a sub scanning direction meet, d ($\mu$m) is distance between the two light-emitting elements, $\lambda$ (nm) is wavelength of laser light, f (mm) is focal length of the collimating lens, and w (mm) is width of the slit.

Preferably, longitudinal direction of the slit corresponds with the main scanning direction.

In accordance with the third aspect of the present invention, an image formation apparatus comprises the laser optical apparatus.

According to the invention, it is possible to control variation in the quantity of light due to the interference of a plurality of laser lights without changing conventional laser scanning optical systems.

In addition, according to the image formation apparatus including the laser optical apparatus of the invention, deterioration in image quality can be prevented by controlling variation in the quantity of light due to the interference of a plurality of laser lights.

BRIEF DESCRIPTION OF THE DRAWINGS

The present invention will become more fully understood from the detailed description given hereinafter and the accompanying drawings which are given by way of illustration only, and thus are not intended as a definition of the limits of the present invention, and wherein:

FIG. 1 is a view showing the rough structure of an image formation apparatus according to an embodiment of the present invention;
FIG. 2 is a view showing the rough structure of an exposure unit (laser scanning optical system) in the image formation apparatus shown in FIG. 1;
FIG. 3 is a view showing the relative positions of a laser light source, a collimating lens, and a slit;
FIG. 4A is a view showing the interference of two plane waves and FIG. 4B is a view showing the relationship between wave number vectors $k_1$ and $k_2$ and a vector K;
FIG. 5A is a view showing the distribution in the x-axis direction of the intensity of a single laser light, FIG. 5B is a view showing the distribution in the y-axis direction of the intensity of a single laser light, and FIG. 5C is a view showing the distribution on a slit surface (x-y plane) of the intensity of a single laser light;
FIG. 6A is a view showing an example of the distribution of light intensity obtained on the slit surface when two laser lights interfere with each other, and FIG. 6B is a view showing another example of the distribution of light intensity obtained on the slit surface when two laser lights interfere with each other;
FIG. 7 is a view showing the relationship between (slit width w/interference fringe cycle Λ) and a contrast C;
FIG. 8 is a view showing effective slit width w' given when the direction in which two light-emitting elements included in the laser light source are arranged is inclined by an angle θ to a sub scanning direction;
FIG. 9 is a view showing the relationship between a tilt angle θ of the laser light source and the appearance of white lines;
FIG. 10A is a view showing the relative positions of beam spots obtained if the direction in which the two light-emitting elements are arranged is approximately parallel to the sub scanning direction, and FIG. 10B is a view showing the relative positions of beam spots obtained if the direction in which the two light-emitting elements are arranged is inclined by an angle θ to the sub scanning direction; and
FIG. 11 is a view showing scanning lines obtained when the laser light source is inclined to the sub scanning direction.

PREFERRED EMBODIMENT OF THE INVENTION

An embodiment of the present invention will now be described with reference to the drawings.

The structure of the embodiment will be described first.

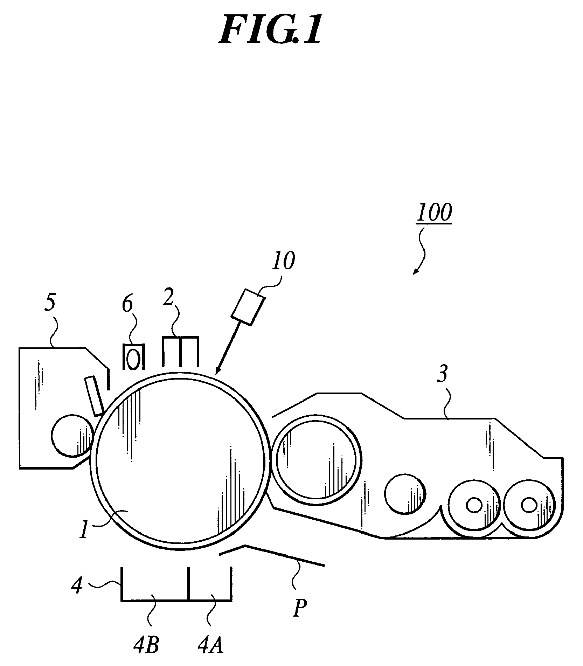

FIG. 1 is a view showing the rough structure of an image formation apparatus 100 according to an embodiment of the present invention. The image formation apparatus 100 is a duplicating machine, a printer, or the like and comprises an exposure unit 10 for forming an electrostatic latent image by scanning a laser light on a photosensitive drum 1, the photosensitive drum 1, a charging unit 2 for charging the photosensitive drum 1, a development unit 3 for adhering toner to the photosensitive drum 1, a transfer unit 4, a cleaner 5 for removing residual toner on the surface of the photosensitive drum 1, and a charge neutralization unit 6 for neutralizing the surface of the photosensitive drum 1. The transfer unit 4 includes a transfer electrode 4A for performing transfer by charging transfer paper P and by making the transfer paper P adsorb a toner image and a separation electrode 4B for neutralizing the transfer paper P to separate the transfer paper P from the photosensitive drum 1. In this embodiment, it is assumed that the direction in which the photosensitive drum 1 rotates is a sub scanning direction and that the direction of the axis (the length) of the photosensitive drum 1 is a main scanning direction.

To form an image, the surface of the photosensitive drum 1 is uniformly charged first by the charging unit 2. A laser light is emitted from the exposure unit 10 on the basis of image data read from a manuscript by, for example, a scanner and a latent image is formed on the photosensitive drum 1. The latent image is reversely developed by the development unit 3 and a toner image is formed on the photosensitive drum 1. Transfer paper P supplied from a paper supply unit (not shown) is conveyed to a transfer position.

The transfer electrode 4A presses the transfer paper P against the development surface of the photosensitive drum 1. Accordingly, the transfer paper P is charged and the toner image on the photosensitive drum 1 adsorbs onto the transfer paper P. Transfer is performed in this way. The separation electrode 4B neutralizes the charged transfer paper P to separate the transfer paper P from the photosensitive drum 1. A fixation unit (not shown) then fixes the toner image on the transfer paper P by heating and pressurizing the transfer paper P. The transfer paper P is delivered by delivery rollers. The cleaner 5 removes residual toner on the photosensitive drum 1. The charge neutralization unit 6 neutralizes the photosensitive drum 1 to make its surface uniform. As a result, a series of processes for forming an image ends.

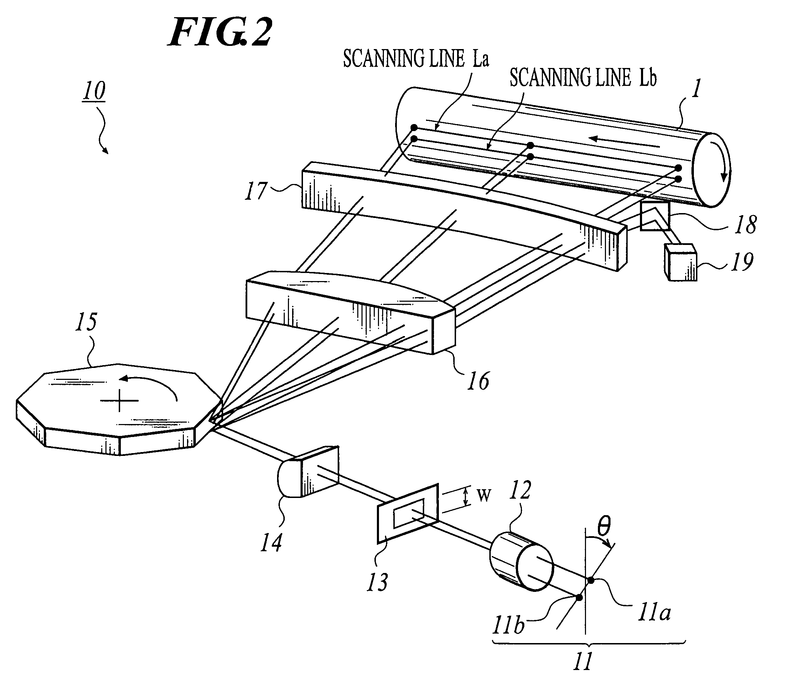

With digital image formation apparatus, such as digital duplicating machines and printers, in order to form an image, usually exposure is performed by scanning a photosensitive drum with a laser light. FIG. 2 is a perspective view showing an example of a laser scanning optical system included in the exposure unit 10.

As shown in FIG. 2, a laser scanning optical system includes a laser light source 11 having two light-emitting elements 11a and 11b, a collimating lens 12, a slit 13, a cylindrical lens 14, a polygon mirror 15, an fθ lens 16, a cylindrical lens 17, a mirror 18, and a horizontal synchronization sensor 19. The two light-emitting elements 11a and 11b included in the laser light source 11 are semiconductor lasers and the direction in which they are arranged is at an angle θ to the sub scanning direction. How to calculate the angle θ will be described in detail later. The mirror 18 and the horizontal synchronization sensor 19 are located at positions which depart from an area on the photosensitive drum 1 where an image is to be formed.

A laser optical unit according to the present invention comprises the laser light source 11, the collimating lens 12, and the slit 13 shown in FIG. 2. A laser optical apparatus according to the present invention comprises such a laser optical unit and the polygon mirror 15.

Two light beams emitted from the light-emitting elements 11a and 11b, respectively, are collimated by the collimating lens 12. The travel of the two light beams which passed through the collimating lens 12 is limited by the slit 13 for shaping a beam spot on the photosensitive drum 1. The two light beams which passed through the slit 13 are directed onto a mirror surface of the rotating polygon mirror 15 by the cylindrical lens 14 and are reflected from the mirror surface. As a result, the two light beams are deflected. The reflecting mirror surface of the polygon mirror 15 can be considered as a virtual light source. The distance from the virtual light source to the surface of the photosensitive drum 1 depends on the direction of the reflecting mirror surface, so the influence of the light beams emitted from the virtual light source on a main scanning speed is compensated for by the fθ lens 16.

The two light beams which passed through the fθ lens 16 are directed onto the photosensitive drum 1 by the cylindrical lens 17. The two light beams directed onto the photosensitive drum 1 are expressed as scanning lines La and Lb shown in FIG. 2. As shown in FIG. 2, a part of the light two beams reflected from the polygon mirror 15 are reflected by the mirror 18. The two light beams reflected by the mirror 18 are detected by the horizontal synchronization sensor 19. The positions where exposure is begun by using the two light beams are determined on the basis of detection results. In the image formation apparatus 100 including the exposure unit 10 shown in FIG. 2, scanning exposure (main scanning) is performed by the rotation of the polygon mirror 15 and sub scanning is performed by the rotation of the photosensitive drum 1. By doing so, an image is formed.

In FIG. 2, the polygon mirror 15 having eight mirror surfaces is used as a scanner for scanning in the main scanning direction by using the two light beams which passed through the slit 13. However, there is no special limit to the number of mirror surfaces of the scanner.

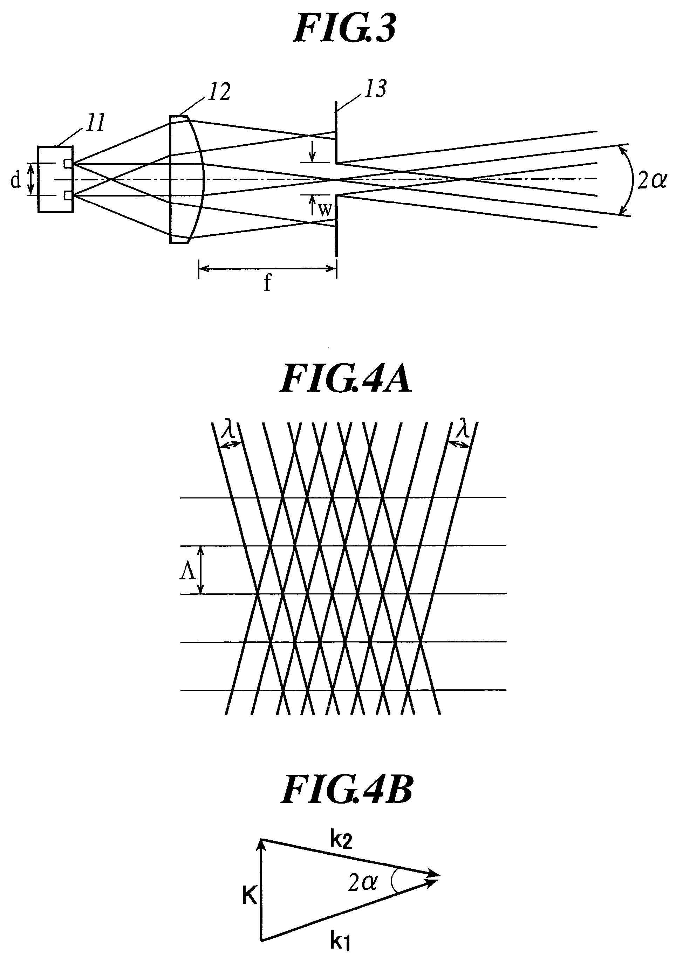

FIG. 3 is a view showing the relative positions of the laser light source 11, the collimating lens 12, and the slit 13. As shown in FIG. 3, after the two light beams emitted from the laser light source 11 pass through the collimating lens 12, principal rays in the two light beams intersect with each other. If the angle between them is 2 α, the distance between the two light-emitting elements included in the laser light source 11 is d, and the focal length of the collimating lens 12 is f, then the following relationship holds:

$$\sin \alpha = d / (2 \cdot f) \cdots (1)$$

where $|\alpha| \ll 1$. Usually the slit 13 is located near the focus on the image side of the collimating lens 12.

The characteristics of the two light beams emitted from the laser light source 11 are highly uniform and they are highly coherent. Therefore, interference fringes appear in the area where the two light beams intersect with each other. FIG. 4A is a view showing the interference of two plane waves. Hereinafter these two plane waves are referred to as plane waves 1 and 2 respectively. If the intensity of the plane waves 1 and 2 are $I_1$ and $I_2$ respectively, and wave number vectors (three-dimensional vectors) of the plane waves 1 and 2 are $k_1$ and $k_2$ respectively, then the intensity I of an associated wave obtained by combining the plane waves 1 and 2 is given by

$$I = I_1 + I_2 + 2\sqrt{I_1 \cdot I_2}\cos\left[(\mathbf{k_1} - \mathbf{k_2})\cdot\mathbf{r} + \phi_{10} - \phi_{20}\right] \cdots (2)$$

where the vector r is an arbitrary direction vector (x, y, z) in a three-dimensional space where the two plane waves exist, $\Phi_{10}$ is an initial phase of the plane wave 1, and $\Phi_{20}$ is an initial phase of the plane wave 2. If the wavelengths of the plane waves 1 and 2 are both $\lambda$, then the absolute values of the wave number vectors of the plane waves 1 and 2 satisfy the equation:

$$\left|\mathbf{k_1}\right| = \left|\mathbf{k_2}\right| = \frac{2\pi}{\lambda} \qquad \cdots(3)$$

The associated wave given by equation (2) corresponds to a standing wave, the frequency of which is constant and the amplitude of which varies according to locations. Positions where the same amplitude and the same intensity are obtained are indicated by a vector given by equation (4), and are on a group of planes perpendicular to a bisector of the directions in which the two plane waves travel.

$$\mathbf{K} = \mathbf{k_1} - \mathbf{k_2} \qquad \cdots(4)$$

FIG. 4B is a view showing the relationship between the wave number vectors $k_1$ and $k_2$ and the vector K. The distance $\Lambda$ between positions on the associated wave where the same amplitude and the same intensity are obtained is given by

$$\Lambda = \frac{2\pi}{\left|\mathbf{K}\right|} = \frac{\lambda}{2\sin\alpha} \qquad \cdots(5)$$

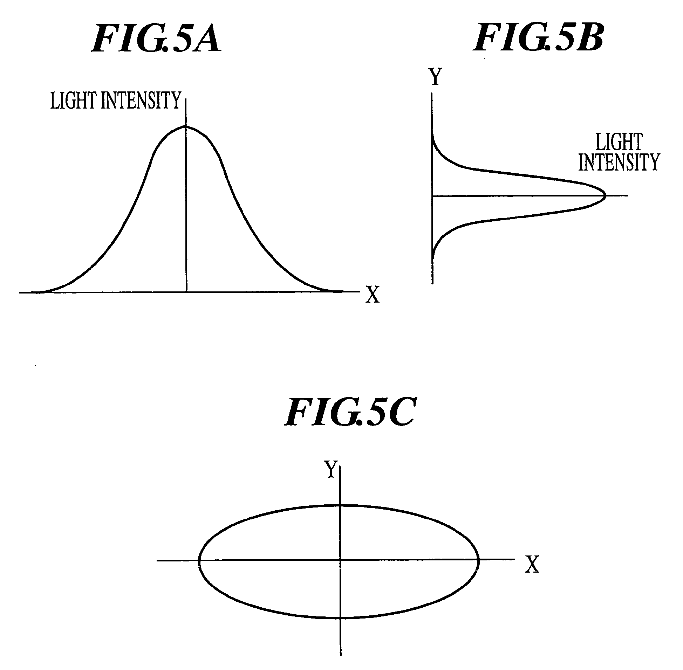

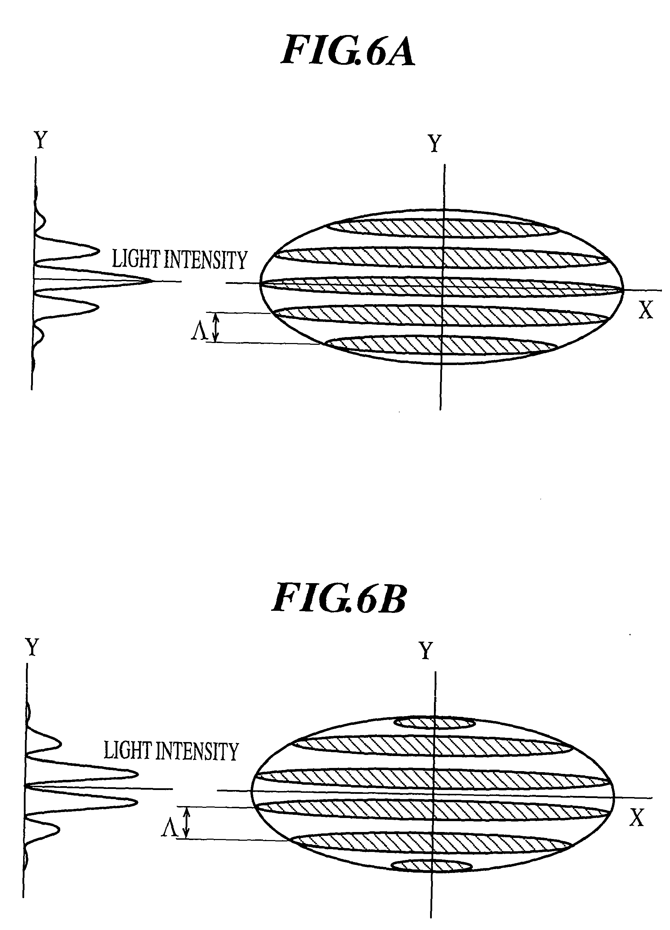

FIGS. 5A through 5C are views showing the distribution of intensity on the surface of the slit 13 in the case of a single laser light (one light beam) entering through the slit 13. FIG. 5A is a view showing the distribution in the x-axis direction (along the longitudinal direction of the slit 13) of intensity. FIG. 5B is a view showing the distribution in the y-axis direction (in the vertical direction) of intensity. In this case, the x-axis direction corresponds to the main scanning direction and the y-axis direction corresponds to the sub scanning direction. As shown in FIGS. 5A and 5B, if a single laser light is used, maximum intensity is obtained in the middle and the intensity distribution forms a smooth curve. Therefore, as shown in FIG. 5C, interference fringes do not appear in the distribution of intensity on the slit surface (x-y plane). On the other hand, if two laser lights (two light beams) enter through the slit 13, these laser lights interfere with each other. Accordingly, the distribution of intensity shown in FIG. 6A or 6B is obtained on the slit surface and interference fringes appear in a cycle of $\Lambda$ (given by equation (5)).

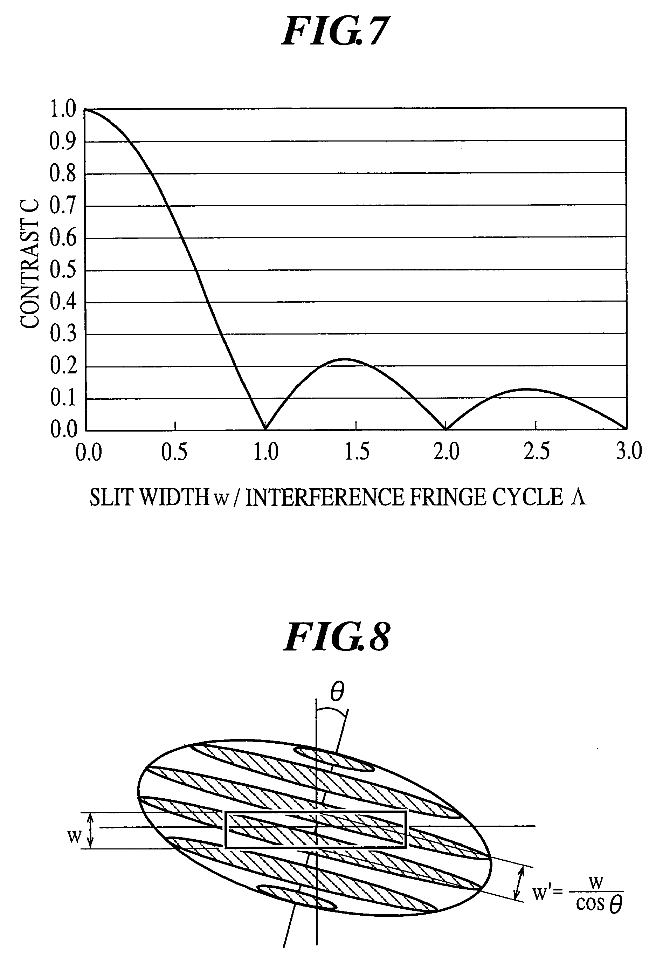

Only part of the interference fringes pass through the slit 13. Therefore, when the distribution of the interference fringes varies due to an unstable laser oscillation of the laser light source 11, the quantity of light which passes through the slit 13 varies. FIG. 7 is a view showing the relationship between the ratio (w/$\Lambda$) of the width w in the sub scanning direction of the slit 13 to the interference fringe cycle $\Lambda$ and a contrast C, being the ratio of a variation to the average value of the quantity of light which passes through the slit 13. Actually, the two light beams emitted from the laser light source 11 may differ slightly in the quantity of light, so the maximum value of the contrast C is smaller than one and the minimum value of the contrast C is greater than zero.

From equations (1) and (5), w/$\Lambda$ is given by

$$w/\Lambda = (w \cdot d)/(f \cdot \lambda) \qquad \cdots(6)$$

In this embodiment, it is assumed that the width w in the sub scanning direction of the slit 13 (hereinafter referred to as "slit width") is 0.58 mm, that the distance d between the two light-emitting elements included in the laser light source 11 is 14 $\mu$m, that the focal length f of the collimating lens 12 is 12 mm, and that the oscillation wavelength $\lambda$ of the laser is 780 nm. In this case, $w/\Lambda = (w \cdot d)/(f \cdot \lambda) = 0.868$. In FIG.7, when $w/\Lambda = 0.868$, the value of C is about 0.15 and a variation of the quantity of light is a little less than 30 percent. Actually, irregular white lines sometimes appear on an image the whole of which is black, resulting in deterioration in image quality. As can be seen from FIG. 7, the value of the contrast C becomes smaller as the value of $w/\Lambda$ approaches one. This means that a variation of the quantity of light can be reduced.

Accordingly, as shown in FIG. 2, the direction in which the light-emitting elements 11a and 11b are arranged is inclined by an angle $\theta$ to the sub scanning direction. By doing so, as shown in FIG. 8, effective slit width expands in relation to an interference fringe cycle. Effective slit width w' is given by

$$w' = w/\cos\theta \quad \cdots(7)$$

The same effect that is obtained by equation (7) can be achieved by inclining the slit 13. However, the diameter of a beam spot changes, so this method is not proper.

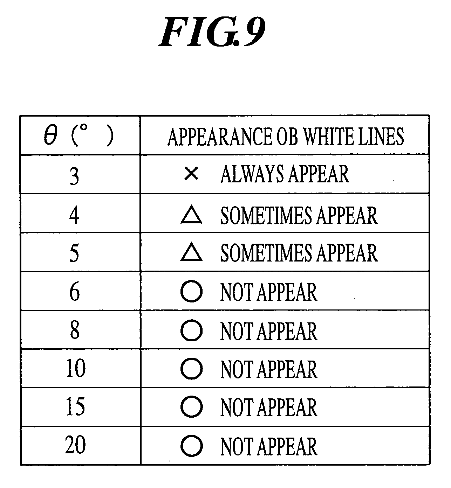

FIG. 9 is a view showing the relationship between an angle $\theta$ by which the direction in which the light-emitting elements 11a and 11b are arranged is inclined and the appearance of irregular white lines on an image the whole of which is black. As can be seen from FIG. 9, irregular white lines do not appear if tilt angle $\theta \geqq 6°$. If $\theta = 6°$, then $(w' \cdot d)/(f \cdot \lambda) = 0.872$ and contrast C = 0.14. In this case, a variation of the quantity of light is below 25 percent. That is to say, if the tilt angle $\theta$ satisfies the following inequality, then irregular white lines do not appear on an image the whole of which is black.

$$(w \cdot d)/(f \cdot \lambda \cdot \cos\theta) \geqq 0.872 \qquad (8)$$

In this embodiment, $\theta = 10°$. Therefore, $(w \cdot d)/(f \cdot \lambda \cdot \cos\theta) = 0.881$. This value satisfies inequality (8), so irregular white lines do not appear on an image the whole of which is black.

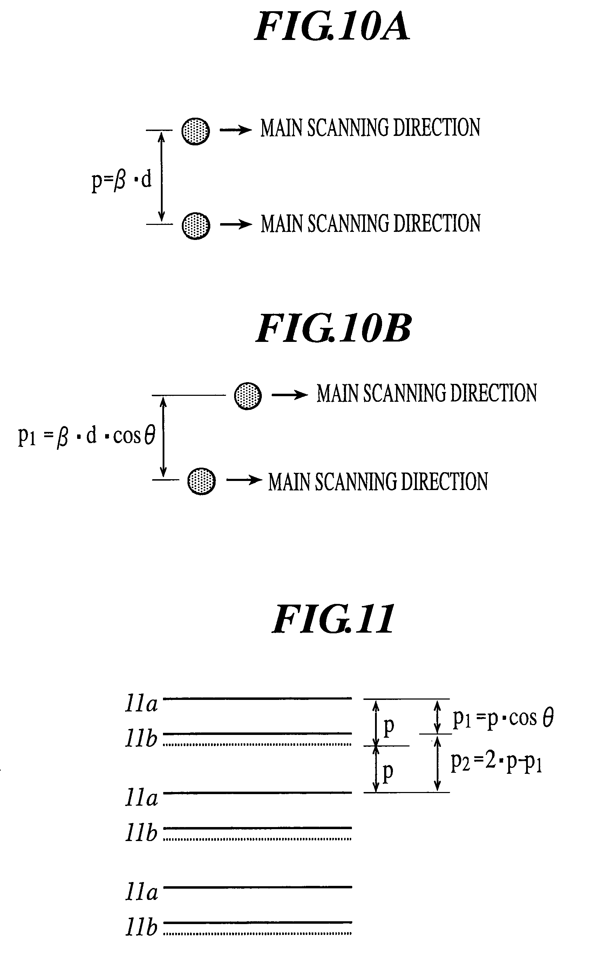

By the way, the relative positions of beam spots on the photosensitive drum 1 vary according to angles by which the direction in which the light-emitting elements 11a and 11b are arranged is inclined to the sub scanning direction. FIG. 10A is a view showing the relative positions of beam spots obtained if the direction in which the light-emitting elements 11a and 11b are arranged is approximately parallel to the sub scanning direction. FIG. 10B is a view showing the relative positions of beam spots obtained if the direction in which the light-emitting elements 11a and 11b are arranged is inclined by an angle $\theta$ to the sub scanning direction. The distance in the main scanning direction between beam spots can be controlled by adjusting the timing of image data by which each laser light is modulated.

The distance in the sub scanning direction between beam spots is referred to as a sub scanning pitch. If the direction in which the light-emitting elements 11a and 11b are arranged is approximately parallel to the sub scanning direction, then the relationship between the distance d between the light-emitting elements 11a and 11b and a sub scanning pitch p is given by

$$p = \beta \cdot d \qquad (9)$$

where $\beta$ is the magnification in the sub scanning direction of the laser scanning optical system.

If the direction in which the light-emitting elements 11a and 11b are arranged is inclined by an angle $\theta$ to the sub scanning direction, then a sub scanning pitch $p_1$ is given by

$$p_1 = \beta \cdot d \cdot \cos\theta \qquad (10)$$

FIG. 11 is a view showing scanning lines (solid lines) formed by beam spots corresponding to light beams emitted from the light-emitting elements 11a and 11b. As shown in FIG. 11, a scanning pitch between beam spots corresponding to light beams emitted from the same light-emitting element is $2 \cdot p$ regardless of whether or not the direction in which the light-emitting elements 11a and 11b are arranged is inclined to the sub scanning direction. Therefore, as shown in FIG. 11, the scanning pitch 2·p between beam spots corresponding to light beams emitted from the same light-emitting element equals the sum of sub scanning pitches $p_1$ and $p_2$. That is to say, $p_2$ is given by

$$p_2 = 2 \cdot p - p_1 \qquad (11)$$

When the difference between $p_1$ and $p_2$ shown in FIG. 11 becomes great, periodic variations in density occur. This leads to deterioration in image quality. An actual examination of the relationship between ($p_1$-$p_2$) and deterioration in image quality showed that when ($p_1$-$p_2$) is greater than or equal to a quarter of the sub scanning pitch p given by equation (9), a glaring defect, such as periodic variations in density or moiré, in an image occurs. It is assumed that a sub scanning pitch variation is given by ($p_1$-$p_2$)/($p_1$+$p_2$). When $p_1$-$p_2$ = (1/4) · p, a sub scanning pitch variation is 0.125. In addition, it was ascertained that when a sub scanning pitch variation is smaller than or equal to 0.1, a defect in an image does not occur. This condition can be written as

$$(p_1 - p_2) / (p_1 + p_2) \leqq 0.1 \qquad (12)$$

That is to say, from equations (9), (10), and (11) and inequality (12), periodic variations in density do not occur if an angle θ by which the direction in which the light-emitting elements 11a and 11b are arranged is inclined to the sub scanning direction satisfies the inequality

$$\cos \theta \geqq 0.9 \qquad (13)$$

Therefore, from inequalities (8) and (13), a tilt angle θ should satisfy the following inequality to control irregular variations in density due to the interference of a plurality of laser lights and regular variations in density due to a variation in sub scanning pitch.

$$0.9 \leqq \cos \theta \leqq (w \cdot d) / (0.872 \cdot f \cdot \lambda) \qquad (14)$$

In this embodiment, a range of 6°≦θ≦25° satisfies inequality (14). The condition indicated by inequality (14) is not a physical condition but an optical condition for designing the laser scanning optical system.

The entire disclosure, including the specification, claims, drawings, and abstract, of Japanese Patent Application No. Tokugan 2005-122174 filed on April 20, 2005 is incorporated herein by reference in its entirety.

**Claims**

1.  A laser optical unit to be incorporated in a laser optical apparatus having a scanner for scanning a light beam in a main scanning direction, the unit comprising:

    a laser light source including two light-emitting elements, time for which one light-emitting element lights overlapping with time for which the other light-emitting element lights;
    a collimating lens located for both of two light beams emitted from the laser light source; and
    a slit located for both of the two light beams, for limiting travel of the two light beams outputted from the collimating lens and inputted to the scanner,

    wherein

$$0.9 \leq \cos\theta \leq (w \cdot d)/(0.872 \cdot f \cdot \lambda)$$

where θ (°) is an angle at which a direction in which the two light-emitting elements are arranged and a sub scanning direction meet, d (μm) is distance between the two light-emitting elements, λ (nm) is wavelength of laser light, f (mm) is focal length of the collimating lens, and w (mm) is width of the slit.

2. The laser optical unit of claim 1, wherein longitudinal direction of the slit corresponds with the main scanning direction.

3. A laser optical apparatus comprising:

a laser light source including two light-emitting elements, time for which one light-emitting element lights overlapping with time for which the other light-emitting element lights;
a collimating lens located for both of two light beams emitted from the laser light source;
a slit located for both of the two light beams, for limiting travel of the two light beams outputted from the collimating lens; and
a scanner located for both of the two light beams for scanning the two light beams which passed through the slit in a main scanning direction,

wherein the laser light source is located so as to satisfy the inequality

$$0.9 \leq \cos\theta \leq (w \cdot d)/(0.872 \cdot f \cdot \lambda)$$

where θ (°) is an angle at which a direction in which the two light-emitting elements are arranged and a sub scanning direction meet, d (μm) is distance between the two light-emitting elements, λ (nm) is wavelength of laser light, f (mm) is focal length of the collimating lens, and w (mm) is width of the slit.

4. The laser optical apparatus of claim 3, wherein longitudinal direction of the slit corresponds with the main scanning direction.

5. An image formation apparatus comprising the laser optical apparatus of claim 3.

# FIG.1

# FIG.2

SCANNING LINE La  SCANNING LINE Lb

*1*

*10*

*17*

*18*

*19*

*16*

*15*

*14*

W

*12*

*13*

θ

*11b*

*11a*

*11*

EP 1 715 369 A1

# *FIG.3*

# *FIG.4A*

# *FIG.4B*

## *FIG.5A*

## *FIG.5B*

## *FIG.5C*

# FIG.6A

# FIG.6B

# *FIG.7*

SLIT WIDTH w / INTERFERENCE FRINGE CYCLE Λ

# *FIG.8*

# FIG.9

| $\theta$ (° ) | APPEARANCE OB WHITE LINES |
|---|---|
| 3 | ✕ ALWAYS APPEAR |
| 4 | △ SOMETIMES APPEAR |
| 5 | △ SOMETIMES APPEAR |
| 6 | ○ NOT APPEAR |
| 8 | ○ NOT APPEAR |
| 10 | ○ NOT APPEAR |
| 15 | ○ NOT APPEAR |
| 20 | ○ NOT APPEAR |

# *FIG.10A*

$$p = \beta \cdot d$$ 〔 ⊙ → MAIN SCANNING DIRECTION

⊙ → MAIN SCANNING DIRECTION

# *FIG.10B*

⊙ → MAIN SCANNING DIRECTION

$$p_1 = \beta \cdot d \cdot \cos \theta$$

⊙ → MAIN SCANNING DIRECTION

# *FIG.11*

*11a* ————————————

*11b* ————————————

*11a* ————————————

*11b* ————————————

*11a* ————————————

*11b* ————————————

$p$

$p$

$p_1 = p \cdot \cos \theta$

$p_2 = 2 \cdot p - p_1$

**European Patent Office**

**EUROPEAN SEARCH REPORT**

Application Number

EP 05 25 7439

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/086142 A1 (AKATSU KAZUHIRO ET AL) 8 May 2003 (2003-05-08) * figures * * paragraph [0029] - paragraph [0043] * | 1-5 | INV. G02B26/12 |
| X | US 2003/209659 A1 (SAKAI KOHJI ET AL) 13 November 2003 (2003-11-13) * abstract; figures 1-3,12a,12b * * paragraph [0185] - paragraph [0193] * | 1-5 | |
| A,D | PATENT ABSTRACTS OF JAPAN vol. 2003, no. 12, 5 December 2003 (2003-12-05) & JP 2004 109588 A (FUJI XEROX CO LTD), 8 April 2004 (2004-04-08) * abstract * | 1-5 | |
| A | US 2001/019564 A1 (OKUWAKI HIROYUKI ET AL) 6 September 2001 (2001-09-06) * abstract * | 1-5 | |
| A | US 5 774 248 A (KOMATSU ET AL) 30 June 1998 (1998-06-30) * abstract * * figures 1-6 * * column 6, line 3 - column 9, line 45 * | 1-5 | TECHNICAL FIELDS SEARCHED (IPC) G02B |

The present search report has been drawn up for all claims

| Place of search | Date of completion of the search | Examiner |
|---|---|---|
| Munich | 22 June 2006 | Windecker, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 715 369 A1**

## ANNEX TO THE EUROPEAN SEARCH REPORT
## ON EUROPEAN PATENT APPLICATION NO.

EP 05 25 7439

This annex lists the patent family members relating to the patent documents cited in the above-mentioned European search report.
The members are as contained in the European Patent Office EDP file on
The European Patent Office is in no way liable for these particulars which are merely given for the purpose of information.

22-06-2006

| Patent document cited in search report | | Publication date | Patent family member(s) | | Publication date |
|---|---|---|---|---|---|
| US 2003086142 | A1 | 08-05-2003 | DE<br>JP | 10251866 A1<br>2003140072 A | 15-05-2003<br>14-05-2003 |
| US 2003209659 | A1 | 13-11-2003 | NONE | | |
| JP 2004109588 | A | 08-04-2004 | NONE | | |
| US 2001019564 | A1 | 06-09-2001 | JP | 2001228418 A | 24-08-2001 |
| US 5774248 | A | 30-06-1998 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 57022218 A
- JP 2004109588 A
- JP 2005122174 A